Europäisches Patentamt

European Patent Office

Office européen des brevets

(19)

(11) Veröffentlichungsnummer : **0 366 734 B1**

## (12) EUROPÄISCHE PATENTSCHRIFT

(45) Veröffentlichungstag der Patentschrift :
**15.04.92 Patentblatt 92/16**

(21) Anmeldenummer : **89902763.5**

(22) Anmeldetag : **17.02.89**

(86) Internationale Anmeldenummer :
**PCT/EP89/00151**

(87) Internationale Veröffentlichungsnummer :
**WO 89/04114 18.05.89 Gazette 89/11**

(51) Int. Cl.$^5$ : **B60S 5/02**, B67D 5/30,
B67D 5/22, G07F 13/00

(54) **KRAFTFAHRZEUGTANKSTELLE MIT MEHREREN BETANKUNGS- UND BEDIENUNGSGERÄTEN.**

(30) Priorität : **29.04.88 DE 8805707 U
20.05.88 DE 3817348**

(43) Veröffentlichungstag der Anmeldung :
**09.05.90 Patentblatt 90/19**

(45) Bekanntmachung des Hinweises auf die
Patenterteilung :
**15.04.92 Patentblatt 92/16**

(84) Benannte Vertragsstaaten :
**AT BE CH DE FR GB IT LI NL SE**

(56) Entgegenhaltungen :
**WO-A-89/00974
US-A- 3 931 497
IBM Technical Disclosure Bulletin, Band 14,
Nr. 10, Mai 1972 (New York, US) L.L. Pelletier:
"Computerized automatic pumping system",
Seiten 3729-3731, siehe das ganze Dokument**

(73) Patentinhaber : **TANKANLAGEN
SALZKOTTEN GMBH
Ferdinand-Henze-Strasse 9
W-4796 Salzkotten (DE)**

(72) Erfinder : **HÜSTER, Bernhard
Walburgisstrasse 12
W-4799 Borchen/Alfen (DE)**
Erfinder : **PAVEL, Klaus
Eynattener Mühle 8
W-4731 Eynatten (DE)**

(74) Vertreter : **Zoepke, Carl O.
Erhardtstrasse 8
W-8000 München 5 (DE)**

EP 0 366 734 B1

Jouve, 18, rue Saint-Denis, 75001 PARIS

## Beschreibung

Die Erfindung bezieht sich auf eine Kraftfahrzeugtankstelle mit einer Mehrzahl von Betankungs- und Bedienungsgeräten für die verschiedenen Kraftstoffarten, die auf einer Tankinsel zusammengefaßt, nebeneinander angeordnet und von beiden Längsseiten her bedienbar sind, wobei jedem Betankungs- und Bedienungsgerät auf jeder Längsseite ein eigener Zapfschlauch zugeordnet ist.

Damit sowohl der links, wie auch der rechts an der Tankinsel vorgefahrene Kraftfahrer individuell Grundpreis, getankte Kraftstoffmenge und den zu zahlenden Endbetrag ablesen kann, ist üblicherweise an jeder Bedienunssseite der Tankinsel und an jeder Zapfsäule eine vollständige Instrumentierung zur Anzeige dieser drei Größen vorgesehen. Ist auf jeder Bedienungsseite der Tankinsel beispielsweise je eine Zapfsäule für Normalbenzin, für Superbenzin und für Dieselkraftstoff installiert, müssen insgesamt achtzehn Anzeigeinstrumente auf beiden Bedienungsseiten untergebracht werden.

Sind die Zapfsäulen für diese drei Kraftstoffarten zu einer Verteilerbatterie nebeneinander zusammengefaßt auf der Tankinsel angeordnet, wie dies aus dem DE-GM 87 01 483 bekannt ist, wird erfahrungsgemäß ein Kraftfahrer sein zu betankendes Fahrzeug so plazieren, daß er eine der Zapfsäulen einer Verteilerbatterie benutzt, die übrigen Zapfsäulen aber blockiert. Bei einem Betankungsvorgang wird demnach nur der Satz von Anzeigeinstrumenten jeweils derjenigen Zapfsäule benötigt,deren Zapfventil gerade betätigt wird.

Es hat sich gezeigt, daß diese Mehrfachanordnung von Anzeigeinstrumenten und Anzeigedisplays an den Zapfsäulen einer jeden Bedienungsseite überflüssig ist und die Herstellung von Zapfsäulen verteuert.

Aus der US-A-3931497 ist es bekannt, auf einer Tankinsel mehrere Betankungsgeräte für die verschiedenen Kraftstoffarten nebeneinander anzuordnen. Als gemeinsames Bedienungsgerät dient eine Abfertigungssäule, die räumlich getrennt von den Betankungsgeräten (Zapfsäulen) auf der Tankinsel aufgestellt ist und vom Tankkunden auf beiden Seiten der Tankinsel bedient werden kann. Diese Abfertigungssäule arbeitet nach Art eines POS-Terminals (electronic-cash-Verfahren) und enthält eine beleuchtete Anzeigetrommel, auf der dem Tankkunden Anweisungen zur Auslösung des Tankvorgangs und zur Kaufpreisabrechnung gegeben werden ,sowie ferner Betätigungstasten, Einsteckschlitze für eine Scheck- oder Kreditkarte bzw. für Bargeld und ein Tastenfeld zur Eingabe der persönlichen Identifikationsnummer (PIN) des Tankkunden. Getankte Kraftstoffmenge und zu zahlender Kaufpreis werden dem Kunden an einer Skala angezeigt, die vor dem nächsten Tankvorgang auf Null gestellt wird. Die von den einzelnen Zapfsäulen räumlich getrennt aufgestellte Abfertigungssäule erschwert die Bedienung vor und nach dem eigentlichen Tankvorgang und blockiert andere Tankkunden während der Bedienung durch den jeweils tankenden Kunden.

Eine ähnliche Bauart ist mit der WO-A-89 00 974 vorgeschlagen worden, bei der auf jeder Längsseite der Tankinsel getrennt von den Zapfsäulen eine als POS-Terminal ausgebildete Abfertigungssäule mit touchscreen aufgestellt ist. Auch bei dieser Anordnung liegen die gleichen Nachteile wie bei der US-A-3931497 vor.

Der Erfindung liegt die Aufgabe zugrunde, bei einer Kraftfahrzeugtankstelle der eingangs genannten Art die für den jeweiligen Tankkunden bestimmte Anzeige seiner Tankdaten im Vergleich zu bisher verwendeten Zählwerkfenstern größer und deutlicher zu machen, andererseits die Anzeigefläche während der Nichtbenutzungszeiten der Zapfsäulen für die Wiedergabe zusätzlicher Informationen, auch in graphischer Form, zu verwenden. Dabei sollen die der Anzeigevorrichtung zugeführten Meßdaten für die Abrechnung und für andere Geschäftsabläufe an und mit der Tankstelle herangezgoen werden können.

Diese Aufgabe wird nach der Erfindung dadurch gelöst, daß den Betankungs- und Bedienungsgeräten auf jeder Längsseite der Tankinsel ein im Bereich dieser Geräte installierter Bildschirm zugeordnet ist, dem die bei einem Betankungsvorgang entstandenen, durch den in jeder Zapfsäule vorhandenen Flüssigkeitsmeßmotor ermittelten und in einem zentralen Preisrechner umgeformten Meßdaten zuführbar und für den Tankkunden ablesbar sind.

Eine Tänkinsel ist hierbei der Platz neben einem zu betankenden Kraftfahrzeug.

Unter Bildschirm soll hier jeder Video- oder Informationsmonitor handelsüblicher Art verstanden werden, der für die Wiedergabe von Video-Aufnahmesignalen als auch als Datensichtgerät für die Anzeige von den im inhouse-Netz der Tankstelle entstandenen und übertragenen Daten geeignet ist. Monitore dieser Art werden üblicherweise auf Ausstellungen und Veranstaltungen eingesetzt und besitzen eine großformatige Bildröhre in flat-square-Röhrentechnik.Durch den fast flachen Bildschirm ergibt sich ein größerer seitlicher Betrachtungswinkel als bei gewölbten Bildschirmen.

Ein derartiger Bildschirm läßt sich bei Ausnutzung der bekannten Ansteuerungsmöglichkeiten, auch mittels Software, in besonders vielfältiger Weise einsetzen.So lassen sich in den Zwischen- und Wartezeiten zwischen zwei Tankvorgängen Werbespots und Werbefilm sowie vor einem Tankvorgang eine für den Tankkunden hilfreiche Benutzerführung beim Tanken aufschalten. Nach dem Tankvorgang können dem Tankkunden als Navigationshilfe Zielführung und Leitempfehlungen aus einer Verkehrszentrale mit elektronischer Straßenkarte, mit Stauwarnungen und Umleitungsempfehlungen eingeblendet werden. Weiterhin lassen sich Ableitungen der Fahrzeuge auf nächstgelegene oder geeignete Park-and-Ride-Plätze anzeigen.

Durch die Verwendung eines einzigen Bildschirms auf jeder Längsseite einer Tankinsel entfallen die einzelnen, bisher in jedem Zapfsäulengehäuse eingebauten Anzeigedisplays Beim Tankvorgang werden die dem entnommenen Kraftstoffvolumen entsprechenden Meßdaten nach Umformung im zentralen Preisrechner an den jeweils seitenbezogenen Bildschirm übertragen und sind dort für den Tankkunden ablesbar.

Zusätzliche elektrische Verbindungen des Bildschirms mit dem zentralen Operatorplatz ermöglichen eine Auswertung und Speicherung der Tankdaten für den weiteren Geschäftsablauf der Tankstelle, beispielsweise für die Vorratshaltung von Kraftstoff in den unterirdischen Lagerbeständen.

Wenn in weiterer Ausgestaltung der Erfindung die jeder Längsseite der Tankinsel zugeordneten Bildschirme einzeln oder gemeinsam in einem Gehäuse untergebracht sind, welches in einer vertikalen Halterung befestigt ist, die endseitig mit einem der Zapfsäulenköpfe verbunden ist, ergibt sich zwischen Bildschirm und Halterung ausreichend Platz für eine Eingabetastatur und für Einsteckschlitze für magnetisch lesbare Identkarten, für Scheck- oder Kreditkarten oder für Bargeld. Über die Eingabetastatur besteht die Möglichkeit, den zu tankenden gewünschten Kraftstoff nach Menge oder Preis in der Abgabe zu begrenzen. Wird die Tastatur nicht betätigt, kann jede gewünschte Menge getankt werden.

Durch die Integrierung des Bildschirms in einem Gehäuse auf jeder Längsseite der Tankinsel werden eine für den Tankkunden bestimmte Anzeige seiner Tankdaten und die Abrechnung über die getankte Kraftstoffmenge in unmittelbarer Nähe des in Anspruch genommenen Zapfpunktes ermöglicht und gewährleistet; es entfallen Umwege, die der Tankkunde machen müßte, wenn erst ein abseits aufgestelltes POS-Terminal für den Abrechnungsvorgang aufgesucht und bedient werden müßte.

Zusätzlich zum Bildschirm-Dialog kann im Innern des Gehäuses zu jeder Längsseite der Tankinsel hin ausgerichtet ein Lautsprecher angeordnet sein, über den der Tankkunde vom zentralen Operatorplatz aus Anweisungen erhalten kann. Diese können durch eine am Gehäuse angeordnete Ruftaste und über ein Mikrofon angefordert werden.

Schließlich ist auch ein optischer Dialog möglich, indem am Tankplatz eine Video-Kamera angeordnet ist, die zweckmäßigerweise auf den Bereich des Nummernschildes und des Einfüllstutzens eines zu betankenden Kraftfahrzeugs ausgerichtet ist. Wenn nicht Maßnahmen vorgesehen sind, die den Zapfschlauch im Einfüllstutzen festhalten, solange noch nicht die getankte Kraftstoffmenge abgerechnet worden ist, besteht durch die am Tankplatz vorgesehene Video-Kamera die Möglichkeit, momentan das Kennzeichen eines Fahrzeugs optisch festzuhalten, dessen Fahrer dadurch auffällt, daß er den Tankplatz ohne Abrechnung verlassen will.

Ein in der Beschreibung näher erläutertes Ausführungsbeispiel der Kraftfahrzeugtankstelle nach der Erfindung ist in der Zeichnung wiedergegeben; es zeigt

Fig. 1 eine aus drei Betankungs- und Bedienungsgeräten zusammengesetzte Verteilerbatterie mit neuartiger Bildschirmanzeige in Seitenansicht;

Fig. 2 eine um 90° verdrehte Ansicht der Verteilerbatterie nach Fig. 1 mit gestrichelt angedeuteter Bildschirmanzeige.

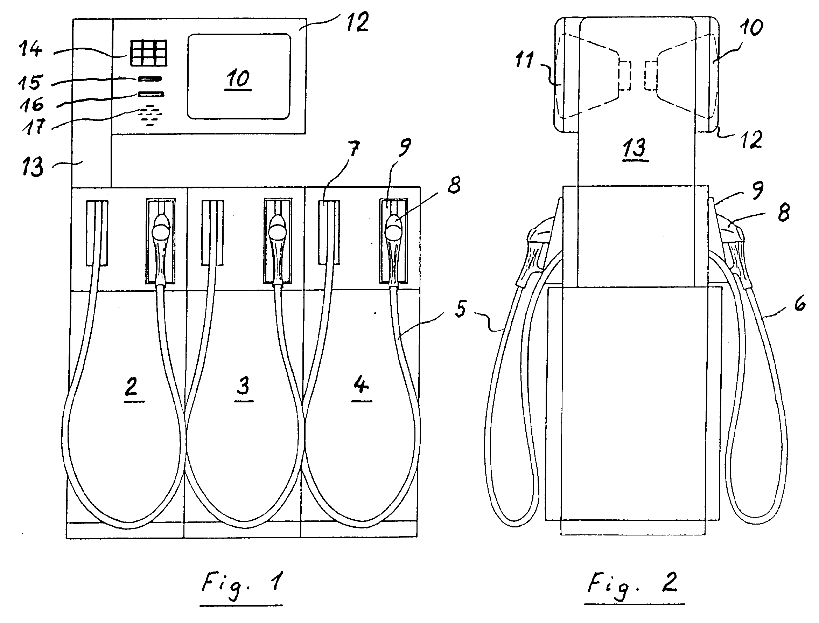

Wie Fig. 1 zeigt, sind unter Bildung einer Tankinsel drei Betankungs- und Bedienungsgeräte 2, 3, 4 für die Abgabe beispielsweise von Normal-, Super-Benzin und Dieselkraftstoff zu einer Multiverteilerbatterie zusammengefaßt. Die einzelnen Geräte 2, 3, 4 sind ohne Zwischenwände nebeneinander aufgesockelt. Zum Betanken kann ein Kraftfahrzeug an jeweils einer Bedienungsseite der Tankinseln heranfahren.

Jedem Betankungs- und Bedienungsgerät ist auf jeder Längsseite der Multiverteilerbatterie ein eigener Zapfschlauch 5, 6 zugeordnet, der aus einer am jeweiligen Gerät vorgesehenen Entnahmeöffnung 7 herausziehbar ist und dessen Zapfventil 8 außer während des Betankungsvorgangs in einer Einhängetasche 9 eingesteckt ist.

Zur Kontrolle des Tankvorganges ist auf jeder Längsseite der Multiverteilerbatterie ein Bildschirm 10, 11 angeordnet, der mit dem Flüssigkeitsmeßmotor eines jeden der Betankungs- und Bedienungsgeräte 2, 3, 4 elektrisch verbunden ist und die Tankdaten desjenigen Betankungs- und Bedienungsgeräts übernimmt und dem Tankkunden anzeigt, an dem gerade getankt wird. Dem Tankkunden werden also auf jeder Bedienungsseite auf dem dort vorgesehenen Bildschirm der Grundpreis für die Kraftstoffart sowie Abgabemenge und Abgabepreis des getankten Kraftstoffs angezeigt.

Die jeder Längsseite zugeordneten Bildschirme 10, 11 sind in einem gemeinsamen Gehäuse 12 an einer vertikalen Halterung 13 befestigt, welche endseitig mit einem der Zapfsäulenköpfe verbunden ist. Der Bildschirm selbst befindet sich auf jeder Längsseite der Multiverteilerbatterie etwä oberhalb des mittleren Geräts 3 und kann als handelsüblicher Flachbildschirm ausgebildet sein.

Das Gehäuse 12 für die Bildschirme 10, 11 enthält auf jeder Seite eine Eingabetastatur 14, mit der der Tankkunde Abgabemenge oder Abgabepreis begrenzen kann.

Das Gehäuse 12 enthält weiterhin einen Einsteckschlitz 15 für magnetisch lesbare Identkarten und einen Einsteckschlitz 16 für Bargeld zum Abrechnen des getankten Kraftstoffes. Zusätzlich kann ein Auswurfschlitz für Barzahlungsbelege vorgesehen sein.

Mit 17 sind Schlitze angedeutet, hinter denen ein Lautsprecher angeordnet ist, über den der Tankkunde vom zentralen Operatorplatz der Tankstelle aus Anweisungen erhalten kann.

Durch Anordnung einer Ruftaste und eines Mikrofons am Gehäuse 12 läßt sich auch ein akustischer Dialog zwischen Tankkunden und zentralem Operatorplatz herbeiführen.

Durch Einsatz einer Video-Kamera besteht weiterhin die Möglichkeit, vom zentralen Operatorplatz aus einen optischen Kontakt mit dem Tankkunden und mit dem zu betankenden Kraftfahrzeug zu erhalten. Hierbei kann der Tankkunde über die Video-Kamera beispielsweise Reifendruck oder Ölstand am herausgenommenen Peilstab anzeigen.

Die Bildschirme 10, 11 im Gehäuse 12 bieten sich weiterhin dafür an, daß in den Zwischen- und Wartezeiten zwischen zwei Tankvorgängen Werbefilm gezeigt wird. Dieser wird bei Entnahme des Zapfventils aus der Entnahmeöffnung der Zapfsäule momentan abgeschaltet.

## Patentansprüche

1. Kraftfahrzeugtankstelle mit einer Mehrzahl von Betankungs- und Bedienungsgeräten für die verschiedenen Kraftstoffarten, die auf einer Tankinsel zusammengefaßt, nebeneinander angeordnet und von beiden Längsseiten her bedienbar sind, wobei jedem Betankungs- und Bedienungsgerät auf jeder Längsseite ein eigener Zapfschlauch zugeordnet ist, dadurch gekennzeichnet, daß den Betankungs- und Bedienungsgeräten (2, 3, 4) auf jeder Längsseite der Tankinsel ein im Bereich dieser Geräte (2, 3, 4) installierter Bildschirm (10, 11) zugeordnet ist, dem die bei einem Betankungsvorgang entstandenen, durch den in jeder Zapfsäule vorhandenen Flüssigkeitsmeßmotor ermittelten und in einem zentralen Preisrechner umgeformten Meßdaten zuführbar und für den Tankkunden ablesbar sind.

2. Kraftfahrzeugtankstelle nach Anspruch 1, dadurch gekennzeichnet, daß die jeder Längsseite der Tankinsel zugeordneten Bildschirme (10, 11) einzeln oder gemeinsam in einem Gehäuse (12) untergebracht sind, welches an einer vertikalen Halterung (13) befestigt ist, die endseitig mit einem der Zapfsäulenköpfe verbunden ist.

3. Kraftfahrzeugtankstelle nach Anspruch 1, dadurch gekennzeichnet, daß der Bildschirm (10, 11) als handelsüblicher Flachbildschirm ausgebildet ist.

4. Kraftfahrzeugtankstelle nach Anspruch 2, dadurch gekennzeichnet, daß im Bereich zwischen Bildschirm (z. B. 10) und vertikaler Halterung (13) das Gehäuse (12) auf jeder Längsseite der Tankinsel eine Eingabetastatur (14) sowie Einsteckschlitze (15 und 16) für magnetisch lesbare Identkarten bzw. für Bargeld aufweist.

5. Kraftfahrzeugtankstelle nach Anspruch 2, dadurch gekennzeichnet, daß im Innern des Gehäuses (12) zu jeder Längsseite der Tankinsel hin ausgerichtet ein Lautsprecher angeordnet ist, über den der Tankkunde vom zentralen Operatorplatz aus Anweisungen erhalten kann.

6. Kraftfahrzeugtankstelle nach Anspruch 5, dadurch gekennzeichnet, daß im Gehäuse (12) eine mit dem zentralen Operatorplatz elektrisch verbundene Ruftaste und ein Mikrofon angeordnet sind.

7. Kraftfahrzeugtankstelle nach Anspruch 1, dadurch gekennzeichnet, daß pro Tankplatz mindestens eine Video-Kamera vorgesehen ist, die mit einem Bildschirm im zentralen Operatorplatz verbunden ist.

8. Kraftfahrzeugtankstelle nach Anspruch 7, dadurch gekennzeichnet, daß die Video-Kamera am Tankplatz auf den Bereich des Nummernschildes und des Einfüllstutzens eines zu betankenden Kraftfahrzeugs ausgerichtet ist.

## Claims

1. Petrol station with several filling and operating appliances for the different types of fuel, these appliances being grouped together on a pump island, arranged next to one another and operable from both longitudinal sides, a separate filling hose being associated with each filling and operating appliance on each longitudinal side, characterized in that a screen (10, 11) is associated with at least one filling and operating appliance (2,3,4) on each longitudinal side of the pump island and installed in the region of said appliances (2,3,4), the measured data generated during a filling procedure, recorded by the liquid metering motor present in each filling pump, and converted in a central price calculator being suppliable to the screen and readable by the pump customer.

2. Petrol station according to Claim 1, characterized in that the screens (10,11) associated with each longitudinal side of the pump island are accommodated individually or together in a housing (12) secured in a vertical mounting (13) which is connected at its end to one of the filling pump heads.

3. Petrol station according to Claim 1, characterized in that the screen (10,11) is in the form of a commercially available flat screen.

4. Petrol station according to Claim 2, characterized in that, in the region between the screen (e.g. 10) and the vertical mounting (13), the housing (12) has on each longitudinal side of the pump island an input keyboard (14) and insertion slots (15 and 16) for magnetically readable identity cards or for cash respectively.

5. Petrol station according to Claim 2, characterized in that a loudspeaker is arranged in the interior of the housing (12) directed towards each longitudinal side of the pump island, and through this the pump customer may receive instructions from the central operator position.

6. Petrol station according to Claim 5, characterized in that a call button electrically connected to the central operator position and a microphone are arranged in the housing (12).

7. Petrol station according to Claim 1, characterized in that at least one video camera is provided for each pump point and is connected to the screen in the central operator position.

8. Petrol station according to Claim 7, characterized in that the video camera at the pump point is directed towards the region of the registration plate and the filling nozzle of a motor vehicle to be filled.

## Revendications

1. Station d'essence comportant pour les différentes sortes de carburants plusieurs appareils distributeurs et de service qui sont groupés sur un îlot de ravitaillement, disposés côte à côte et adaptés à être utilisés à partir de chacun des côtés longitudinaux de l'îlot, chaque appareil distributeur et' de service étant, sur chacun des grands côtés, pourvu d'un tuyau distributeur particulier, caractérisée en ce qu'à chacun des appareils distributeurs et de service (2,3,4) sur chaque grand côté de l'îlot de ravitaillement est associé un écran de visualisation (10,11) installé au voisinage de ces appareils (2,3,4), cet écran étant adapté à recevoir les indications résultant des mesures effectuées au cours d'une opération de ravitaillement, transmises par le compteur de débit de liquide existant dans chaque colonne de ravitaillement et transformées dans un poste central de facturation pour pouvoir être lues par les clients de la station d'essence.

2. Station d'essence selon la revendication 1, caractérisée en ce que les écrans de visualisation (10,11) disposés à l'endroit de chacun des grands côtés de l'îlot de ravitaillement sont logés séparément ou ensemble dans un boîtier (12), qui est fixé sur une monture verticale (13), dont l'extrémité est liée à la tête de l'une des colonnes de ravitaillement.

3. Station d'essence selon la revendication 1, caractérisée en ce que l'écran de visualisation (10,11) est constitué par un écran plat de type commercial courant.

4. Station d'essence selon la revendication 2, caractérisée en ce que le boîtier (12) prévu à l'endroit de chacun des grands côtés de l'îlot de ravitaillement comporte entre l'écran de visualisation (tel que 10) et la monture verticale (13) un clavier de commande (14) ainsi que des fentes d'introduction (15 et 16) pour des cartes personnelles à lecture magnétique et pour de l'argent liquide.

5. Station d'essence selon la revendication 2, caractérisée en ce que, à l'intérieur du boîtier (12), est logé un haut-parleur dirigé vers chacun des grands côtés de l'îlot de ravitaillement, pour permettre au client de la station d'essence de recevoir des informations provenant d'un poste central d'opération.

6. Station d'essence selon la revendication 5, caractérisée en ce que dans le boîtier (12) sont disposés un bouton d'appel relié électriquement au poste central d'opération et un microphone.

7. Station d'essence selon la revendication 1, caractérisée en ce que pour chaque poste de ravitaillement est prévue au moins une caméra vidéo reliée à un écran de visualisation placée au poste central d'opération.

8. Station d'essence selon la revendication 7, caractérisée en ce que la caméra vidéo prévue à l'endroit du poste de ravitaillement est pointée sur la zone de la plaque d'immatriculation et de l'orifice de remplissage d'un véhicule à ravitailler.

Fig. 2

Fig. 1